(19) Europäisches Patentamt / European Patent Office / Office européen des brevets

(11) **EP 4 455 726 A1**

(12) **EUROPEAN PATENT APPLICATION**

(43) Date of publication:
**30.10.2024 Bulletin 2024/44**

(21) Application number: **23170612.8**

(22) Date of filing: **28.04.2023**

(51) International Patent Classification (IPC):
**G01S 13/32** $^{(2006.01)}$    **G01S 7/35** $^{(2006.01)}$
**G01S 13/42** $^{(2006.01)}$    **G01S 13/58** $^{(2006.01)}$

(52) Cooperative Patent Classification (CPC):
**G01S 13/325; G01S 7/352; G01S 13/42; G01S 13/584**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Imec VZW**
**3001 Leuven (BE)**

(72) Inventors:
• **Bourdoux, Andre**
  **4910 Theux (BE)**
• **Bauduin, Marc**
  **1040 Brussel (BE)**

(74) Representative: **AWA Sweden AB**
**Box 5117**
**200 71 Malmö (SE)**

(54) **RADAR SIGNAL AND SIGNAL PROCESSING METHOD**

(57) A radar signal for transmitting by a radar transmitter, wherein the radar signal is modulated by a modulation signal comprising at least two repetitions of a sequence element, wherein the sequence element comprises at least two repetitions of at least two sequences of a same length, such that the modulation signal is periodic; wherein the at least two sequences are correlated such that a sum of correlation of the at least two sequences is less than - 60 dB , preferably less than - 70 dB, most preferably less than - 80 dB.

FIG. 2A

**Description**

<u>Technical field</u>

The present description relates to a radar signal, to a radar signal processing method, and to a radar transmitter.

<u>Background</u>

Radar technology has been widely studied and used for a wide variety of applications, such as civilian, automotive, defence and space applications. There is a growing demand for advanced radar systems for various operational requirements.

Phase-Modulated Continuous Wave, PMCW, radar is a type of radar that is becoming increasingly popular due to its unique characteristics and benefits. It is especially attractive for detection of fast moving targets, such as in automotive scenarios.

PMCW radar uses a modulation signal, such as a sequence or a waveform, to phase modulate a carrier for transmission. A PMCW radar transmitter can transmit a phase-modulated continuous wave signal and a PMCW radar receiver can receive a reflection signal caused by the signal transmitted in an environment and reflected from a target. Based on the reflection signal, it is possible to determine information, such as a range, velocity, and direction, of the target with high accuracy.

The reflection signal is a delayed version of the transmitted signal. The delay is proportional to the target's range, i.e. the distance from the radar site to the target measured along the line of sight. In order to estimate the range, the reflection signal is correlated with the transmitted signal for producing a range profile. The range profile contains a peak at the location of the target which is proportional to the power reflected from the target. When there are multiple targets, the range profile comprises multiple peaks corresponding to the multiple targets.

Ideally, the values should be zeros in the range bins of the range profile corresponding to locations where no target exists. In practice, non-zero values may appear in the range bins of the range profile corresponding to locations where no target exists, which are known as range sidelobes. The range sidelobes are caused by the properties of the modulation signal.

In order to provide an accurate detection of targets and to improve radar performance, there is a need to reduce sidelobes.

<u>Summary</u>

An objective of the present description is to provide an improved radar signal, an improved radar signal processing method, and an improved radar transmitter.

To be specific, an objective of the present description is to provide a radar signal for transmitting by a radar transmitter, having an improved Doppler resilience.

Another objective of the present description is to provide a signal processing method for processing a reflection signal caused by said radar signal transmitted in an environment and reflected by a target, for achieving low sidelobes, such that detection of small and/or distant target can be achieved.

According to a first aspect, there is provided a radar signal for transmitting by a radar transmitter. The radar signal is modulated by a modulation signal comprising at least two repetitions of a sequence element. The sequence element comprises at least two repetitions of at least two sequences of a same length, such that the modulation signal is periodic. The at least two sequences are correlated such that a sum of correlation of the at least two sequences produces range sidelobes less than - 60 dB, preferably less than - 70 dB, most preferably less than - 80 dB.

The inventive concept is to create a modulation signal by repeating correlated sequences having a very low sum of correlation, or even having a perfect sum of correlation (i.e. sum of correlation is equal to zero) in a specific way, and use such modulation signal to modulate a radar signal for transmitting by a radar transmitter.

PMCW radars are known to procude high range sidelobes in presence of Doppler frequency shift due to moving targets.The effect is even more important when targetting an ideal sum of correlations, such as an ideal sum of the periodic auto-correlation (sum-PAC) of the at least two sequences from the same radar transmitter, instead of ideal periodic auto-correlation of the respective sequences.

The radar signal of the first aspect provides a transmitted signal which may allow processing to keep low range sidelobes, even in presence of high Doppler frequency shifts.

By using such radar signal, it is therefore possible to detect a reflection signal resulting from said radar signal transmitted and reflected by a small and/or distant target (e.g., a reflection signal of a low power level).

According to one embodiment, the radar signal is a Phase-Modulated Continuous-Wave, PMCW, signal. This may be advantageous for scenarios with fast moving targets, such as automotive scenarios.

According to one embodiment, a first example modulation signal consists of a number $M * N$ of repetitions of the sequence element; wherein the sequence element consists of a number $2 * K$ of sequences arranged in an order of two sequences $S_1$, two sequences $S_2$, ... and two sequences $S_K$; wherein the sequences $S_1$, $S_2$, ... $S_K$ form a Complementary Sequence Set, CSS (L, K) $\{S_1, S_2, ... S_K\}$, and wherein the length of each of the sequences $S_1$, $S_2$, ... $S_K$ is L.

According to one embodiment, a second example modulation signal consists of a number N of repetitions of the sequence element; wherein the sequence element consists of a number $(M + 1) * K$ of sequences arranged in an order of a number $M + 1$ of repetitions of a sequence $S_1$, a number $M + 1$ of repetitions of a sequence $S_2$, ... and a number $M + 1$ of repetitions of a sequence $S_K$; wherein the sequences $S_1$, $S_2$, ... $S_K$ form a Complementary Sequence Set, CSS (L, K) $\{S_1, S_2, ... S_K\}$, and wherein the length of each of the sequences $S_1$, $S_2$, ... $S_K$ is L.

According to one embodiment, K is an even positive integer, such as 2, 4, 6, ....

According to one embodiment, L is a positive integer.

According to one embodiment, when L is an odd positive integer, K is a multiple of 4, such as 4, 8, 12, ....

According to one embodiment, M is a positive integer and M > 1. In practice, M can be a small integer, such as 1, 2, 3, ....

According to one embodiment, N is a positive integer and $N \geq 2$. In practice, N is typically much larger than 2, such as 128, 256.

According to one embodiment, when $K = 2$, the sequences $S_1$ and $S_2$ are Golay Complementary Pairs, GCP.

According to one embodiment, $L = 2^a 10^b 26^c$, and any of $a,b,c$ is a positive integer or zero.

According to one embodiment, a number $N_{Tx}$ of radar signals for simultaneously transmitting by a number $N_{Tx}$ of radar transmitters of a Multiple-Input-Multiple-Output, MIMO, radar, respectively, is provided, wherein each radar signal of the number $N_{Tx}$ of radar signals is a radar signal according to any previous embodiments, and wherein the number $N_{Tx}$ of radar signals are orthogonal to each other.

By extending a single radar signal to a plurality of radar signals being orthogonal between each other, the plurality of radar signals can be simultaneously transmitted by a number $N_{Tx}$ of radar transmitters of a Multiple-Input-Multiple-Output, MIMO, radar, respectively. This may be advantageous as it is no longer needed to use any outer code with Hadamard matrices or adding additional sequences in time-division multiplex for modulating MIMO radar signals.

According to one embodiment, said CSS formed by the sequences $S_1$, $S_2$, ... $S_K$ of said modulation signal for modulating each radar signal of the number $N_{Tx}$ of radar signals belongs to a Mutually Orthogonal Complementary Set, MOCS (L, K, P) $\{CSS_1, CSS_2, ... CSS_P\}$ comprising a number P of CSSs, wherein $P \leq K$ and $P \geq N_{Tx}$.

According to one embodiment, $K = P = N_{Tx}$. This may be advantageous as when $K = P$, it may outperform the combination of Almost Perfect Sequences, APS, and Hadamard outer code in Doppler ambiguity by a factor 2.

According to a second aspect, there is provided a signal processing method, comprising: obtaining a signal comprising a reflection signal caused by a radar signal transmitted in an environment and reflected by a target, said radar signal being a radar signal according to the first aspect; extracting, from the obtained signal, data comprising a Fast-Time dimension and a Slow-Time dimension; processing the extracted data for generating converted data comprising the Fast-Time dimension and a Doppler frequency dimension; compensating the converted data for Doppler shift; and performing a range correlation along the Fast-Time dimension on the compensated data for generating a resulting data comprising a range dimension and the Doppler frequency dimension.

The radar signal that is used includes at least two sequences which are repeated for periodicity such that the modulation signal of the radar signal may ensure that range sidelobes are very low. However, this implies that the radar signal may be sensitive to Doppler shift.

The signal processing method enables efficient Doppler compensation by compensating for Doppler shift prior to performing the range correlation. Therefore, the signal processing method ensures that the radar signal that is sensitive to Doppler shift may still be used.

By processing the reflection signal according to the signal processing method of the second aspect, the radar signal's sensitivity to Doppler shift can thus be compensated. This implies that the radar signal that generates very low range sidelobes may be used. Hence, radar performance for detecting small and/or distant targets (e.g., a reflection signal of a low power level) can be improved.

According to one embodiment, the signal processing method comprises: prior to the step of processing the extracted data, splitting the extracted data into a number K of partial extracted data, which respectively comprises data related to one sequence of the sequences $S_1$, $S_2$, ... $S_K$ of said modulation signal, wherein each of the number K of partial extracted data is arranged as a two-dimensional, 2D, matrix $(L * N)$, wherein one dimension is the Fast-Time dimension (L) and another dimension is the Slow-Time dimension (N).

According to one embodiment, the step of processing the extracted data comprises for each of the number K of partial extracted data: converting the Slow-Time dimension of said partial extracted data to the Doppler frequency dimension for generating a 2D Fast-Time -Doppler matrix $(L * N)$.

According to one embodiment, the step of compensating the converted data comprises for each of the number K of partial extracted data: compensating, for each element of the generated 2D Fast-Time -Doppler matrix $(L * N)$, a phase rotation caused by Doppler shift along the Fast-Time dimension.

According to one embodiment, the step of performing a range correlation comprises for each of the number K of partial extracted data: performing a range correlation along the Fast-Time dimension on the compensated 2D Fast-Time - Doppler matrix ($L * N$) for generating a 2D Range - Doppler matrix ($L * N$).

According to one embodiment, the signal processing method further comprises: generating the resulting data based on said 2D Range - Doppler matrix generated for each of the number K of partial extracted data.

According to one embodiment, the resulting data is a 2D Range - Doppler matrix ($L * N$). The resulting data may comprise information of the radar ranging performance, e.g., range sidelobes, and information of the target, e.g., the target's range.

According to one embodiment, the resulting data is a 2D Range - Doppler map, RDM. The RDM may visualize different properties of the radar ranging performance, e.g., range sidelobes, and the target, e.g., the target's range.

According to one embodiment, the step of compensating the converted data comprises compensating, independent of the Fast-Time dimension, a time offset between a start point in time of the sequence $S_1$ and each of the sequences $S_2, ... S_K$ of one sequence element of said modulation signal.

According to one embodiment, the step of compensating the converted data comprises compensating, along the Fast-Time dimension, the phase rotation, column-wise of the generated 2D Fast-Time - Doppler matrix ($L * N$).

According to one embodiment, wherein for each of the number K of partial extracted data, the method further comprises:

prior to the step of processing the extracted data, performing a coherent accumulation on the extracted data along the Slow-Time dimension.

According to one embodiment, the step of converting the Slow-Time dimension of said partial extracted data to the Doppler frequency dimension comprises performing a Fast Fourier Transform, FFT, or a Discrete Fourier Transform, DFT.

According to one embodiment, a size of the FFT or DFT is N.

According to one embodiment, for each of the number K of partial extracted data, the method further comprises: prior to the step of **performing** a range correlation, performing a coherent accumulation on the compensated data along the Doppler frequency dimension.

According to one embodiment, the step of converting the Slow-Time dimension of said partial extracted data to the Doppler frequency dimension comprises performing a FFT or a DFT.

According to one embodiment, a size of the FFT or DFT is $M * N,$ when said radar signal is a radar signal according to the first example modulation signal of the first aspect.

According to one embodiment, a size of the FFT or DFT is N, when said radar signal is a radar signal according to the second example modulation signal of the first aspect.

According to a third aspect, there is provided a radar transmitter configured to transmit a signal according to the first aspect.

According to a fourth aspect, there is provided a radar receiver configured to receive a reflection signal caused by a radar signal transmitted in an environment and reflected by a target, said radar signal being a signal according to the first aspect.

According to a fifth aspect, there is provided a non-transitory computer readable recording medium having computer readable program code recorded thereon which when executed on a device having processing capability is configured to perform the method of the second aspect.

The third, fourth, and fifth aspects may generally present the same or corresponding advantages as the first and second aspects.

Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.

Fig. 1A is a schematical view of a radar system.
Fig. 1B is a prior art modulation signal.
Fig. 1C is a block diagram of a prior art radar transceiver.
Fig. 1D is a schematical view of a prior art radar signal processing method.
Fig. 1E is a diagram of a range profile.
Fig. 2A is a schematical view of an example modulation signal for SISO implementation.
Fig. 2B is a schematical view of example modulation signals for MIMO implementation.
Fig. 3A is a schematical view of an example modulation signal for SISO implementation.

Fig. 3B is a schematical view of example modulation signals for MIMO implementation.

Fig. 4 is a diagram of a range-Doppler map resulting from a radar signal modulated by the example modulation signal of Fig. 2A processed by the radar signal processing method of Fig. 1D.

Fig. 5A is a diagram of example radar signal processing method.

Fig. 5B is a schematical view of an example radar signal processing method.

Fig. 6A- 6B are block diagrams of example signal processing methods.

Fig. 7A- 7D are diagrams of range-Doppler map.

Fig. 8 is a diagram of a reference range profile.

## Detailed description

In the case of Single-Input-Single-Output, SISO, radar ranging, a SISO radar system (not shown) may comprise one radar transmitter and one radar receiver. The radar transmitter and radar receiver may be in the form of a radar transceiver.

The radar transmitter may transmit a radar signal in an environment, which may be reflected (or scattered), by a physical object, e.g., a target, in the environment. There may be more than one targets in the environment. A radar signal reflected (i.e. a reflection signal) by the target may be received by the radar receiver.

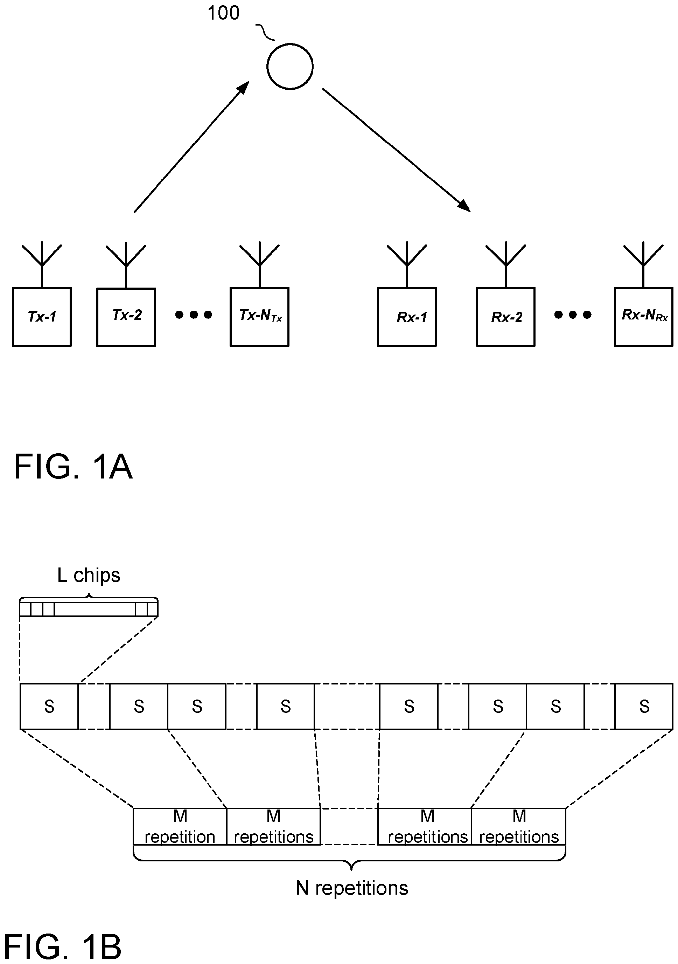

Fig. 1A illustrates an example of a radar system comprising a plurality of radar transmitters Tx-1, Tx-2, ... Tx-$N_{Tx}$, and a plurality of radar receivers Rx-1, Rx-2, .... Rx-$N_{Rx}$. The radar system of Fig. 1A may be a Multiple-Input-Multiple-Output, MIMO, radar system.

For SISO radar ranging, one radar transmitter may transmit a radar signal. The radar signal may be reflected by a target 100. One radar receiver may receive a reflection signal reflected by the target 100.

For MIMO radar ranging, a plurality of radar signals may be simultaneously transmitted by the plurality of radar transmitters Tx-1, Tx-2, ... Tx-$N_{Tx}$, respectively. The plurality of radar signals may be reflected by the target 100. Each of the plurality of radar receivers Rx-1, Rx-2, .... Rx-$N_{Rx}$, may respectively receive a reflection signal.

A processor (not shown) may process the received reflection signal(s) for performing target estimation regarding the target. The target estimation may involve one or more quantities related to the position of the target, such as a distance to the target, an elevation angle of the target, an azimuth angle of the target, etc. Further, the target estimation may involve one or more quantities related to movement of the target, such as a radial velocity, i.e. a radial component of the velocity of the target.

Fig. 1B illustrates a prior art modulation signal for modulating a radar signal for transmitting by a SISO radar transmitter.

The modulation signal of Fig. 1B consists of a number $M * N$ of repetitions of a basic sequence S. Every number M of the basic sequences S can be considered as a sequence group. The modulation signal consists of a number N repetitions of such sequence group. Each basic sequence S consists of a number L of chips of a duration Tc.

Thus, number M of consecutive range profiles can be accumulated to improve Signal-to-Noise Ratio, SNR,.

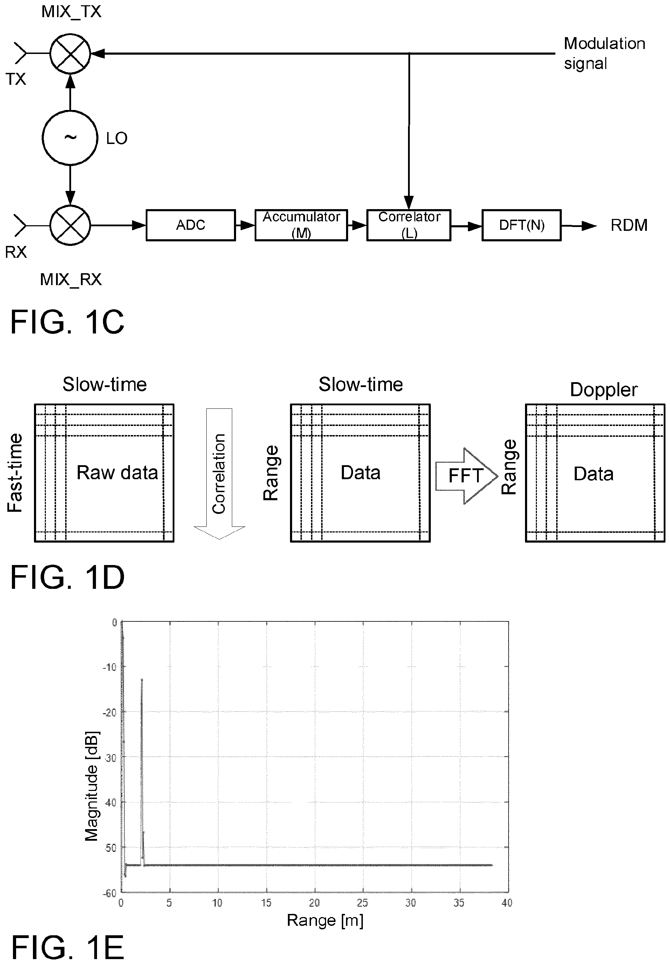

Fig. 1C illustrates a prior art PMCW radar transceiver.

A radar signal to be transmitted is generated by mixing a radio frequency, RF, carrier generated by a local oscillator, LO, and a modulation signal, such as the modulation signal of Fig. 1B. In Fig. 1C, the RF carrier is modulated by the modulation signal by a first mixer, MIX_TX. An Tx antenna is configured to transmit the radar signal in an environment.

The modulation signal may be a sequence consisting of a plurality of symbols. For example, if it is a binary PMCW radar transceiver, each symbol may be -1 or 1, mapping to 0 degree and 180 degree phase shifts of a continuous RF carrier. The symbols of the sequence may be any other values.

An Rx antenna is configured to receive a reflection signal, which is typically shifted down to a lower intermediate frequency, IF, signal, before it is processed. In Fig, 1C, this is achieved by a second mixer, MIX_RX, mixing the reflection signal with a signal generated by the LO.

The Analog-to-digital converter, ADC, will sample data from the IF signal for further processing.

After the sampling, M coherent accumulations and L correlations are performed on the sampled data for generating range profiles.

Then, Doppler processing can be achieved by performing a time domain to Doppler frequency domain transform, by using e.g., Discrete Fourier Transforms, DFT, or Fast Fourier Transforms, FFT, along the slow time. Consequently, the slow-time domain can be transformed to Doppler frequency domain.

Some example parameters are listed herein.

The symbol duration is Tc.

A bandwidth is defined as $BW = 1/Tc.$

The length of the basic sequence of the modulation signal (i.e. the number of symbols of the basic sequence) is L.

The number of accumulations is M.

The size of FFT/DFT is N.

The total frame duration is $L * M * N * Tc$.

An additional parameter, linked to the length of the basic sequence L, is the type of the basic sequence. Maximum-length sequences, MLS, see e.g., M. Skolnik, Radar Handbook, Third Edition, Electronics electrical engineering. McGraw-Hill Education, 2008, and Almost Perfect Sequences, APS, see e.g., W. Van Thillo, P. Gioffre, V. Giannini, D. Guermandi, S. Brebels, and A. Bourdoux, "Almost Perfect Auto-correlation Sequences for Binary Phase-modulated Continuous Wave Radar," Radar Conference (EuRAD), 2013 European, Oct 2013, pp. 491-494, are often used as sequences of modulation signals for their periodic auto-correlation, PAC, properties.

Some components of the radar transceiver are not shown in Fig. 1C, such as amplifiers, filters, etc. which will not be discussed herein as they are less relevant for the present description.

In connection with Fig. 1D, a prior art radar signal processing method will be discussed.

The received reflection signal can be processed by a radar signal processing method for providing information regarding the target. The steps of converting the received reflection signal to baseband, and sampling are known and not discussed in detail herein. Thus, Fig. 1D focuses on the range-Doppler processing.

The sampled raw data, e.g., a set of data, may comprise both a Fast-Time, FT, dimension and a Slow-Time, ST, dimension. Typically, the sampled raw data may be arranged in a 2D matrix such that its columns correspond to slow-time, ST, and it rows correspond to fast-time, FT, as shown in Fig. 1D.

Fast-time may refer to a small-scale time. For example, multiple data samples of a single radar pulse may be measured along fast-time.

Slow-time may refer to a large-scale time relative to the "Fast-Time". For example, multiple radar pulses may be measured along slow-time.

In Fig. 1D, firstly, range correlation is performed along the FT, such that the sampled raw data can be converted to data comprising the ST dimension and a range dimension.

Secondly, a ST to Doppler frequency transform is performed such that the data is further converted to data comprising the range dimension and the Doppler frequency dimension. A range-Doppler map, RDM, can be generated based on the resulting data.

The transmitted radar signal may be reflected from one or more targets in the environment. This produces a linear combination of cyclically delayed version of the radar signal. This delay is proportional to the target range location. In order to estimate this delay, the reflection signal is correlated with the transmitted radar signal for generating a range profile.

The range profile typically comprises an x-axis representing range (meter) and a y-axis representing a magnitude (dB), as shown in Fig. 1E. The projection of each magnitude peak of the range profile in the x-axis represents a range of a target, which is proportional to the power reflected back from the target. It can be seen that the range profile of Fig. 1E visualizes two targets.

A range bin may refer to a smallest unit of distance that a radar system is able to measure. Ideally, the output of the correlator should contain zeros in the range bins which do not correspond to any target. In practice, some non-zero values may appear caused by the properties of the modulation signal. Those non-zero values are known as range sidelobes. For example, if the basic sequence of the modulation signal of Fig. 1B is a Maximum-length sequence, MLS, range sidelobes will be $-20\log_{10}(L)$ dB below the peak of the range profile, wherein L is the length of the basic sequence S of the modulation signal. If the length of the basic sequence S is 512, the sidelobe level is $-54$ dB ($-20\log_{10}(512) = -54$ dB).

The repetitions of the basic sequence S can exploit the periodic auto-correlation property of the sequence. However, for binary code sequences, perfect sequences (i.e. sequences that have an auto-correlation equal to 0 for all non-zero delay) do not exist for any sequence having a length L larger than 4.

The APS have perfect auto-correlation over the first half of the range profile or, equivalently, their zero-correlation zone, ZCZ, length is L/2. They are good candidates as modulation signals for a binary PMCW radar signal, but their length must be doubled in practice to have the same ZCZ, which degrades the Doppler ambiguity. Indeed, the Doppler frequency ambiguity and velocity ambiguity are inversely proportional to the sequence length L:

$$f_{Dop,amb} = \frac{1}{2MLT_c}$$

$$v_{amb} = \frac{\lambda}{4MLT_c}$$

Extended to MIMO radars, orthogonality between every two of the multiple transmitted signals, and between every two of the multiple modulation signals are needed. Orthogonality can be achieved by known methods, such as time-division multiplex or slow-time code-division multiplex with a Hadamard matrix as an outer code.

However, for each modulation signal, its sequence element should have number M+1 of basic sequences S instead of number M of basic sequences S. In other words, one additional basic sequence S is needed for each sequence group. This is because changes in the outer code break the periodicity.

Further, the time-division multiplex or the slow-time code-division multiplex would degrade the ambiguous velocity because of the required repetition of number M+1 of basic sequences. Therefore, when the MIMO radar has a number $N_{Tx}$ of radar signals for transmitting simultaneously, the velocity ambiguity is:

$$v_{amb} = \frac{\lambda}{4N_{Tx}(M+1)LT_c}$$

The combination of APS and outer code is known to be used for MIMO binary PMCW radar in the prior art.

The following concepts and definitions are introduced before discussing the invention.

*1. Periodic auto-correlation, PAC*

A PAC of a sequence S having a length of L is defined as:

$$\rho_{SS}(k) = \sum_{j=0}^{L-1} S(j)\, S((mod(j+k,L))), \quad 0 \le k \le L-1.$$

A perfect PAC is equal to L for $k = 0$ and equal to 0 for $1 \le k \le L - 1$.

*2. Periodic cross-correlation, PCC*

A PCC of two sequences A1 and A2 each having a length of L is defined as:

$$\rho_{A1A2}(k) = \sum_{j=0}^{L-1} A1(j)\, A2\big(mod(j+k,L)\big), \; 0 \le k \le L-1.$$

A perfect PCC is equal to 0 for $0 \le k \le L - 1$.

*3. Golay complementary pairs, GCP*

Golay sequences, or Golay complementary pairs, are a complementary pair of sequences that have a perfect sum of their PAC, sum-PAC. Thus, if two sequences A and B are Golay sequences, the sum-PAC is perfect. The sum-PAC is defined as:

$$\rho_{AA}(k) + \rho_{BB}(k) = 2L\delta(k)$$

The sum-PAC is perfect, if it is equal to 2L for $k = 0$, and 0 otherwise.

However, it is not easy to directly use Golay sequences A and B as modulation signals for radars, e.g., PMCW radars, because alternating the sequences A and B will break the periodicity. Further, as discussed above for the MIMO implementation, each sequence A or B (or each group of the sequences A or B) must be preceded by one additional sequence. Thus, Golay sequences A and B cannot be directly used as modulation signals.

*4. Complementary Sequence Set, CSS*

The concept of a complementary pair of sequences can be extended to a complementary set consisting of more than two sequences.

A CSS is a set of complementary sequences, see e.g., Chin-Chong Tseng and C. Liu, "Complementary sets of sequences, " in IEEE Transactions on Information Theory, vol. 18, no. 5, pp. 644-652, September 1972, doi: 10.1109/TIT.1972.1054860.

The CSS consists of two or more complementary sequences. Its two or more complementary sequences have a perfect sum-PAC.

A CSS (L, K) means that the CSS consists of a number K of sequences, each sequence has a length L. For example, two Golay complementary sequences can be considered as a CSS consisting two sequences, i.e. CSS (L, 2).

*5. Mutually Orthogonal Complementary Sets, MOCS*

MOCS consist of a plurality of CSSs being orthogonal to each other, see e.g., Chin-Chong Tseng and C. Liu, "Complementary sets of sequences," in IEEE Transactions on Information Theory, vol. 18, no. 5, pp. 644-652, September 1972, doi: 10.1109/TIT.1972.1054860.

A MOCS (L, K, P) consists of a number P of CSS (L, K), each CSS (L, K) consisting of a number K of complementary sequences each having a length L. The number P is smaller or equal to K.

For example, a MOCS (L, 2, 2) consisting of two CSS, a first CSS consisting of sequences A1, B1, and a second CSS consisting of sequences A2, B2. They have the following orthogonality property:

$$\rho_{A1A2}(k) + \rho_{B1B2}(k) = 0, \quad 0 \le k \le L - 1.$$

The MOCS have a perfect sum-PCC.

Thus, modulation signals for the radar signals to be transmitted simultaneously by a MIMO radar can be based on a MOCS (L, K, P) consisting of the number P of CSS (L, K), as said radar signals are "naturally" orthogonal to each other.

Hence, there is no need to use time-division multiplex or code-division multiplex when MOCS are used with a MIMO radar.

Thus, with above concepts and definitions in mind, it seems that it is possible to use GCP, CSS and MOCS for modulating radar signals in SISO/MIMO radar implementations. However, there may still be two main obstacles linked together:

1. Periodicity

The CSS consists of different sequences. Hence, the sequences cannot be simply repeated periodically and a scheme to transmit sequentially the number K of sequences of each CSS is needed.

2. Doppler sensitivity

The GCP, CSS and MOCS are sensitive to Doppler. This sensitivity also exists for simpler sequences (e.g., APS), but is exacerbated with the complementary sequences because two or more sequences must be transmitted at different time instants, and must be added in the receiver. Therefore, phase rotations due to Doppler exist not only during each constituting sequence but also between the transmit instants of the different constituting sequences, which breaks the perfect sum-PAC and perfect sum-PCC.

In order to create a modulation signal by using the sequences of a CSS, the sequences must be arranged in a specific way. The different arrangements of the sequences would result in different sensitivities to Doppler.

The invention relating to an improved radar signal and an improved radar signal processing method to achieve a better Doppler resiliency and eliminating and/or overcome at least some of the obstacles discussed above.

To be specific, a modulation signal based on GCP, CSS and/or MOCS and the radar signal processing method, for e.g., a PMCW SISO/MIMO radar, are proposed herein for resulting in excellent PAC and PCC over the full unambiguous Doppler interval.

The present description provides a radar signal for transmitting by a radar transmitter. The radar signal is modulated by a modulation signal comprising at least two repetitions of a sequence element. The sequence element comprises at least two repetitions of at least two sequences of a same length, such that the modulation signal is periodic. The at least two sequences are correlated such that a sum of correlation of the at least two sequences produces range sidelobes less than - 60 dB, preferably less than - 70 dB, most preferably less than - 80 dB.

For example, two sequences A and B of the same length are provided. The sequences A and B are correlated, such that a sum of correlation of the sequences A and B produces very low, or even zero range sidelobes. One example of the sum of correlation of the sequences A and B may be a sum of periodic auto-correlation: $\rho_{AA}(k) + \rho_{BB}(k)$.

The sequence element may be "AABB". By providing at least two repetitions of A and at least two repetitions of B within the sequence element, periodicity of the modulation signal can be achieved.

The modulation signal may be "AABBAABB... ". By repeating the sequence element "AABB" at least twice, slow time and Doppler dimension can be created for further signal processing, which will be discussed later in the present description.

Even if the sum of correlation of the sequences may not be perfect (i.e. the sum of correlation of the sequences is not equal to zero), as long as it is sufficiently low, such as less than - 60 dB, it is possible to detect a reflection signal resulting from said radar signal transmitted and reflected by a small and/or distant target.

The sum of correlation of the at least two sequences may be perfect, when it is equal to zero.

The term "correlated" may refer to a mathematical relationship between the at least two sequences, such that there is a certain degree of dependence or association between the sequences and/or between the values of the elements of the sequences. For example, two Golay complementary sequences are correlated.

The radar signal may be phase modulated, e.g., binary-phase modulated, and quadrature-phase modulated.

Said radar signal may be transmitted by a SISO radar transmitter or by one radar transmitter of a pluraltiy of MIMO radar transmitters.

The radar signal may be a Phase-Modulated Continuous-Wave, PMCW, signal. The two phases may be 0 degree and 180 degree, respectively corresponds to "-1" and "1" of the modulation signal.

The radar system may be a Phase-Modulated Continuous Wave, PMCW, radar system.

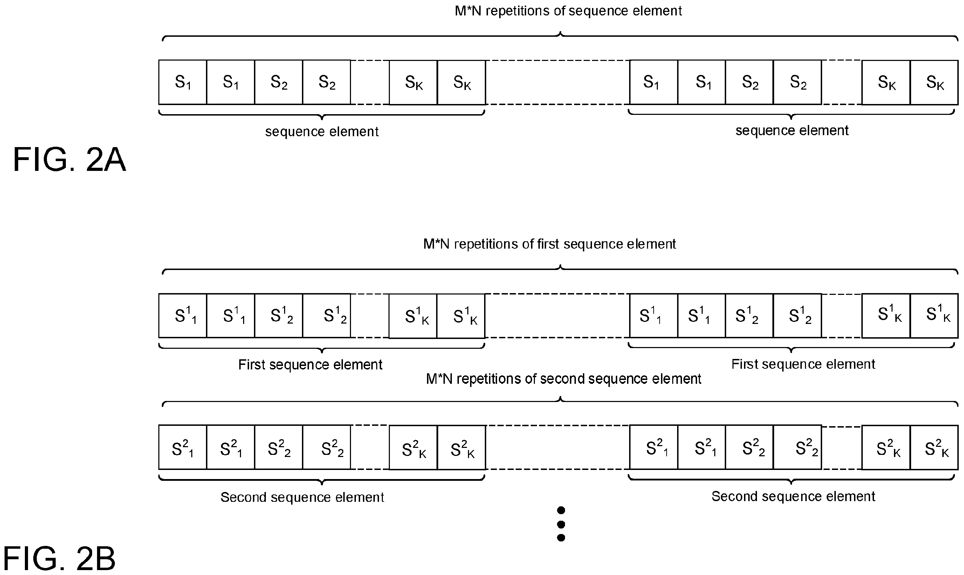

Fig. 2A is a schematical view of an example modulation signal for SISO implementation. In connection with Fig. 2A, an example modulation signal for modulating a radar signal will be discussed in more detail.

In Fig. 2A, the sequence element consists of a number $2 * K$ of sequences arranged in an order of two sequences $S_1$, following by two sequences $S_2$, ... and following by two sequences $S_K$. The modulation signal consists of a number $M * N$ of repetitions of the sequence element. The sequences $S_1$, $S_2$, ... $S_K$ form a complementary sequence set, CSS (L, K) consisting of $S_1$, $S_2$, ... $S_K$.

The length of each of the sequences $S_1$, $S_2$, ... $S_K$ is L. The term "length" may refer to a number of elements, e.g., symbols, of a sequence. For example, each of the sequences $S_1$, $S_2$, ..., $S_K$ may comprise a number L of symbols, each symbol being 1 or -1, or any other values.

As discussed above, any CSS has a perfect sum periodic auto-correlation, sum-PAC. Thus, the CSS (L, K) consisting of $S_1$, $S_2$, ... $S_K$ has a perfect sum-PAC.

In order to use the CSS to create a modulation signal for modulating a radar signal, e.g., of a PMCW radar, by exploiting their PAC properties, it is not sufficient to transmit alternating sequences of the CSS, such as $S_1$, $S_2$, ..., $S_K$, $S_1$, $S_2$,..., $S_K$, ..., $S_1$, $S_2$,..., $S_K$. Indeed, each of the sequences $S_1$, $S_2$, ..., $S_K$, must be transmitted at least twice consecutively for periodicity.

K may be an even positive integer, such as 2, 4, 6, ....

L may be a positive integer. When L is an odd positive integer, K may be a multiple of 4, such as 4, 8, 12, ....

M may be a positive integer and $M \geq 1$.

N may be a positive integer and $N \geq 2$.

In practice, N is typically much larger than 2, such as 128, 256. However, M can be a small integer, such as 1, 2, 3, ...

If $K = 2$, there are only two sequences $S_1$ and $S_2$ of the CSS (L, 2). The sequences $S_1$ and $S_2$ may be Golay Complementary Pairs, GCP. The length L may be defined by $L = 2^a 10^b 26^c$, and any of $a, b, c$ may be a positive integer or zero.

For MIMO radar implementations, there is provided a number $N_{Tx}$ of radar signals for simultaneously transmitting by a number $N_{Tx}$ of radar transmitters of a MIMO radar, respectively. Each radar signal of the number $N_{Tx}$ of radar signals may be a radar signal modulated by a modulation signal mentioned above in the present description.

For each modulation signal, its number K of sequences $S_1$, $S_2$, ... $S_K$ form a CSS (L, K). Said number $N_{Tx}$ of $CSS_1$, $CSS_2$, ... $CSS N_{Tx}$ belong to a Mutually Orthogonal Complementary Set, MOCS (L, K, P) consisting of a number P of CSS, i.e. $CSS_1$, $CSS_2$, ... $CSS_P$, wherein $P \leq K$ and $P \geq N_{Tx}$. The $CSS_1$, $CSS_2$, ... $CSS_P$ are mutually orthogonal to each other.

As discussed above, any CSS in a MOCS has a perfect sum-PAC, and/or a perfect sum-PCC. Thus, the MOCS (L, K, P) consisting of $CSS_1$, $CSS_2$, ... $CSS_P$ has a perfect sum-PAC and/or a perfect sum-PCC.

In connection with Fig. 2B, example modulation signals for modulating the number $N_{Tx}$ of radar signals will be discussed in detail.

In Fig. 2B, a first and a second modulation signal of the number $N_{Tx}$ of modulation signals are illustrated in detail.

Analogously to the modulation signal in Fig. 2A, the first modulation signal consists of a number $M * N$ of repetitions of a first sequence element. The first sequence element consists of a number $2 * K$ of sequences arranged in an order of two sequences $S^1_1$, two sequences $S^1_2$, ... and two sequences $S^1_K$. The sequences $S^1_1$, $S^1_2$, ... $S^1_K$ form a first complementary sequence set, $CSS_1$ (L, K). The $CSS_1$ (L, K) has a perfect sum-PAC.

The second modulation signal consists of a number $M * N$ of repetitions of a second sequence element. The second sequence element consists of a number $2 * K$ of sequences arranged in an order of two sequences $S^2_1$, two sequences $S^2_2$, ... and two sequences $S^2_K$. The sequences $S^2_1$, $S^2_2$, ... $S^2_K$ form a second complementary sequence set, $CSS_2$ (L, K). The $CSS_2$ (L, K) has a perfect sum-PAC.

If $N_{Tx}$ = 2, a first radar signal modulated by the first modulation signal and a second radar signal modulated by the second modulation signal are orthogonal. Thus, the first and second radar signals can be transmitted simultaneously by two radar transmitters without interfering with each other.

If $K$ = 2, each of the $CSS_1$ (L, 2) and $CSS_2$ (L, 2) consists of two sequences, i.e. $S^1_1$, $S^1_2$, and $S^2_1$, $S^2_2$. $S^1_1$ and $S^1_2$ are complementary sequences, and $S^2_1$ and $S^2_2$ are complementary sequences.

The $CSS_1$ (L, 2) and the $CSS_2$ (L, 2) belong to a MOCS (L, 2, P).

If $N_{Tx}$ > 2, the additional modulation signals of the number $N_{Tx}$ of modulation signals can be created analogously as the first and second modulation signal.

In short, since the CSS belonging to the same MOCS are orthogonal to each other, the radar signals respectively modulated by modulation signals based on such CSS are orthogonal to each other, and can be transmitted simultaneously.

The $CSS_1$, $CSS_2$, ... $CSS_{NTx}$ are mutually orthogonal to each other. The MOCS (L, K, P) consisting of $CSS_1$, $CSS_2$, ... $CSS_P$ has a perfect sum-PAC and/or a perfect sum-PCC.

For example, the numbers K, P and $N_{Tx}$ may be equal to each other. That is, $K = P = N_{Tx}$.

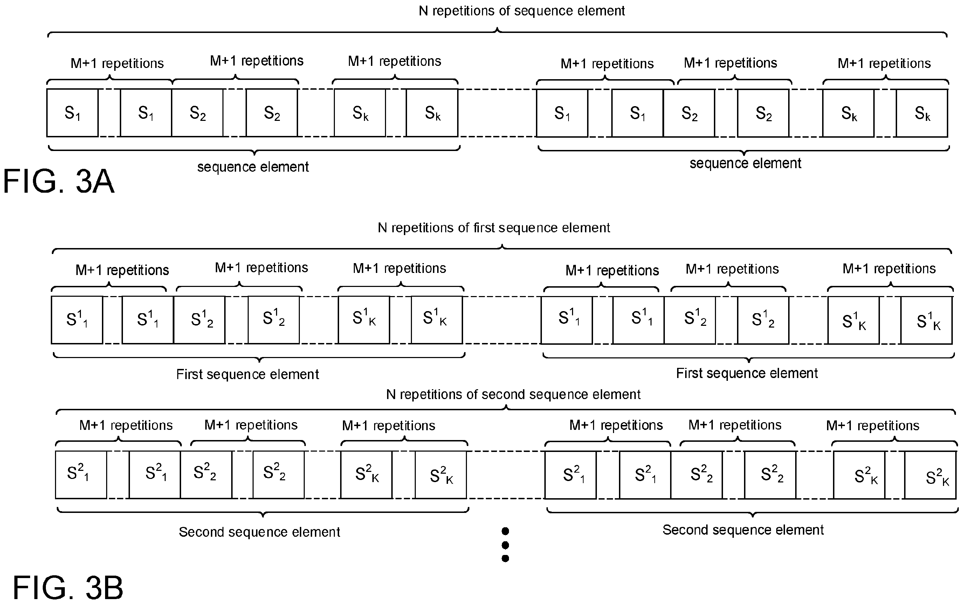

Fig. 3A is a schematical view of an example modulation signal for SISO implementation. In connection with Fig. 3A, an example modulation signal for modulating a radar signal will be discussed in more detail.

In Fig. 3A, the sequence element consists of a number $(M + 1) * K$ of sequences arranged in an order of a number $M + 1$ of sequences $S_1$, following by a number $M + 1$ of sequences $S_2$, ... , and following by a number $M + 1$ of sequences $S_K$. The modulation signal consists of a number N of repetitions of the sequence element. The sequences $S_1$, $S_2$, ... $S_K$ form a CSS (L, K) consisting of $S_1$, $S_2$, ... $S_K$.

The length of each of the sequences $S_1$, $S_2$, ... $S_K$ is L.

As discussed above, any CSS has a perfect sum periodic auto-correlation, sum-PAC. Thus, the CSS (L, K) consisting of $S_1$, $S_2$, ... $S_K$ has a perfect sum-PAC.

K may be an even positive integer, such as 2, 4, 6, ....

L may be a positive integer. When L is an odd positive integer, K may be a multiple of 4, such as 4, 8, 12, ....

M may be a positive integer and $M \geq 1$.

N may be a positive integer and $N \geq 2$.

In practice, N is typically much larger than 2, such as 128. However, M can be a small integer, such as , 1, 2, 3, ...

If $K$ = 2, there are only two sequences $S_1$ and $S_2$ of the CSS (L, 2). The sequences $S_1$ and $S_2$ may be Golay Complementary Pairs, GCP. The length L may be defined by $L = 2^a 10^b 26^c$, and any of a, b, c may be a positive integer or zero.

Analogously to the modulation signal of Fig. 2A, the modulation signal of Fig. 3A can be extended to a number $N_{Tx}$ of modulation signals for modulating a number $N_{Tx}$ of radar signals, respectively.

In connection with Fig. 3B, example modulation signals for modulating the number $N_{Tx}$ of radar signals will be discussed in detail.

In Fig. 3B, a first and a second modulation signals of the number $N_{Tx}$ of modulation signals are illustrated in detail.

Analogously to the modulation signal in Fig. 3A, the first modulation signal consists of a number N of repetitions of a first sequence element. The first sequence element consists of a number $(M + 1) * K$ of sequences arranged in an order of number $M + 1$ of sequences $S^1_1$, number $M + 1$ of sequences $S^1_2$, ..., and number $M + 1$ of sequences $S^1_K$. The sequences $S^1_1$, $S^1_2$, ... $S^1_K$ form a first $CSS_1$ (L, K). The $CSS_1$ (L, K) has a perfect sum-PAC.

The second modulation signal consists of a number N of repetitions of a second sequence element. The second sequence element consists of a number $(M + 1) * K$ of sequences arranged in an order of number $M + 1$ of sequences $S^2_1$, number $M + 1$ of sequences $S^2_2$, ..., and number $M + 1$ of sequences $S^2_K$. The sequences $S^2_1$, $S^2_2$, ... $S^2_K$ form a second $CSS_2$ (L, K). The $CSS_2$ (L, K) has a perfect sum-PAC.

If $N_{Tx}$ = 2, a first radar signal modulated by the first modulation signal and a second radar signal modulated by the second modulation signal are orthogonal. Thus, the first and second radar signals can be transmitted simultaneously by two radar transmitters without interfering with each other.

If $K$ = 2, each of the $CSS_1$ (L, 2) and the $CSS_2$ (L, 2) consists of 2 sequences, i.e. $S^1_1$, $S^1_2$, and $S^2_1$, $S^2_2$. $S^1_1$ and $S^1_2$ are complementary sequences, and $S^2_1$ and $S^2_2$ are complementary sequences.

The $CSS_1$ (L, 2) and the $CSS_2$ (L, 2) belong to a MOCS (L, 2, P).

If $N_{Tx}$ > 2, the other modulation signals of the number $N_{Tx}$ of modulation signals can be created analogously as the first and second modulation signal.

In short, since the CSS belonging to the same MOCS are orthogonal to each other, the radar signals respectively modulated by modulation signals based on the CSS are orthogonal to each other, and can be transmitted simultaneously.

The $CSS_1$, $CSS_2$, ... $CSS_{NTx}$ are mutually orthogonal to each other. The MOCS (L, K, P) consisting of $CSS_1$,

$CSS_2$, ... $CSS_P$ has a perfect sum-PAC and/or a perfect sum-PCC.

For example, the numbers K, P and $N_{Tx}$ may equal to each other. That is, $K = P = N_{Tx}$.

A radar transmitter, e.g., a SISO radar transmitter, may transmit a radar signal modulated by a modulation signal of the present description.

A plurality of radar transmitters, e.g., MIMO radar transmitters, may simultaneously transmit a plurality of radar signals modulated by a plurality of modulation signals of the present description.

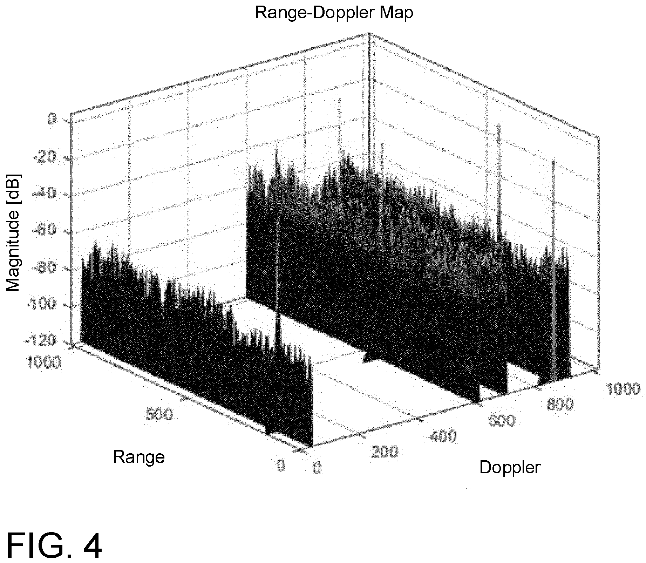

Using the signal processing method of Fig. 1D to process data sampled from a reflection signal caused by the radar signal modulated by the modulation signal of Fig. 2A, transmitted in an environment, and reflected by five targets, a diagram of a simulation RDM is shown in Fig. 4. It can be seen that the range sidelobes are about - 45 dB, which is too high.

Under the same simulation condition, the RDM based on the data sampled from a reflection signal caused by the radar signal modulated by the modulation signal of Fig. 3A, transmitted in the environment, and reflected by five targets, has also high range sidelobes (not shown).

However, the poor performance is expected as both GCS and CSS used to construct the modulation signal for modulating the radar signal are sensitive to Doppler.

Thus, an improved signal processing method is needed.

In order to improve the radar performance, there is provided the following signal processing method. The signal processing method may improve Doppler resiliency when using a radar signal modulated by a modulation signal, e.g., the examples of Fig. 2A- 3B in the present description.

The signal processing method comprises obtaining (S501) a signal comprising a reflection signal caused by a radar signal modulated by a modulation signal in the present description transmitted in an environment and reflected by a target.

The reflection signal may be received by a radar receiver.

The radar signal may be a radar signal of a SISO radar, or a radar signal of multiple radar signals of a MIMO radar.

The signal processing method comprises extracting (S502), from the obtained signal, data comprising a FT dimension and a ST dimension. The extracting may refer to sampling.

The signal processing method comprises processing (S503) the extracted data for generating converted data comprising the FT dimension and a Doppler frequency dimension. That is, the ST dimension of the extracted data is converted to a Doppler frequency dimension, e.g., by a known algorithm, such as FFT and DFT.

The signal processing method comprises compensating (S504) the converted data for Doppler shift. The step of compensating (S504) may also refer to Doppler compensating herein.

The phase rotation of the reflection signal during the coherent observation time severely degrades the range sidelobes. Assuming that a single target in the radar line-of-sight, and assuming that a target Doppler offset is known, it is possible to compensate the phase rotation prior to the range correlation.

The signal processing method comprises performing (S505) a range correlation along the FT dimension on the compensated data for generating a resulting data comprising a range dimension and the Doppler frequency dimension. The resulting data comprises information relating to radar ranging performance, e.g., range sidelobes, and information of the target, e.g., the target's range.

The signal processing method may comprise generating a Range - Doppler map, RDM, based on the resulting data.

The RDM may visualize information relating to the radar ranging performance, e.g., range sidelobes, and the target, e.g., the target's range.

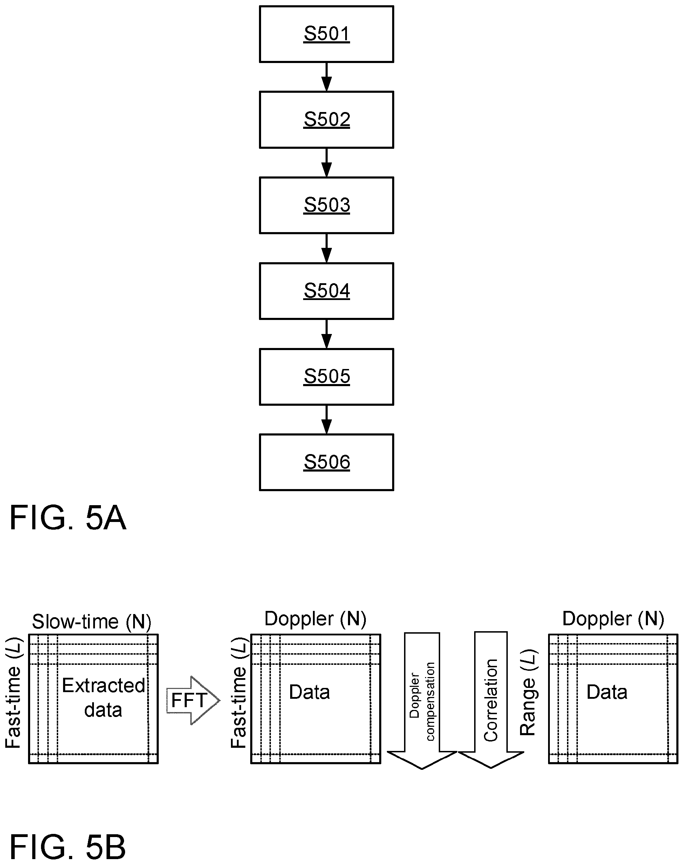

In connection with Fig. 5B, the signal processing method will be discussed in more detail.

The extracted data can be arranged e.g., in an array or a 2D matrix, with one FT dimension and one ST dimension, as the sampled raw data in Fig. 1D.

The FT dimension may correspond to the length L of the sequences of the modulation signal for modulating the radar signal. For example, there may be a number L of extracted data along the FT dimension.

The ST dimension may correspond to the factor N of the number $M * N$ of repetitions of the sequence element of the modulation signal for modulating the radar signal, when the modulation signal is as the example of fig. 2A. For example, there may be a number N of extracted data along the ST dimension.

The ST dimension may correspond to the number N of repetitions of the sequence element of the modulation signal for modulating the radar signal, when the modulation signal is as the example of fig. 3A. For example, there may be a number N of extracted data along the ST dimension.

The extracted data may be arranged in a 2D matrix such that its number N columns correspond to ST, and its number L rows correspond to FT, as shown in Fig. 5B.

The signal processing method may comprise prior to the step of processing (S503) the extracted data, splitting the extracted data into a number K of partial extracted data, which respectively comprises data related to one sequence of the sequences $S_1$, $S_2$, ... $S_K$ of said modulation signal, wherein each of the number K of partial extracted data is arranged as a two-dimensional, 2D, matrix ($L * N$), wherein one dimension is the FT dimension (L) and another dimension is the ST dimension (N).

The extracted data related to different sequences of the modulation signal may be split and processed separately in parallel.

Then, a ST to Doppler frequency transform is performed such that the extracted data is further converted to a set of data comprising the FT dimension and the Doppler frequency dimension.

The step of processing (S503) the extracted data may comprise for each of the number K of partial extracted data, converting the ST dimension of said partial extracted data to the Doppler frequency dimension for generating a 2D FT-Doppler matrix (*L* ∗ *N*).

To enable the Doppler compensation, the step of processing (S503) is performed prior to the step of compensating (S504). The step of processing (S503) may output a 2D FT-Doppler matrix. This may allow an accurate compensation, in each Doppler bin (e.g., column-wise), of the phase rotation in FT due to Doppler shift. The Doppler compensation may be performed along the FT dimension.

The step of compensating (S504) the converted data may comprise for each of the number K of partial extracted data:

compensating, for each element of the generated 2D FT-Doppler matrix (*L* ∗ *N*), a phase rotation caused by Doppler shift along the Fast-Time dimension.

For example, if two sequences $S_1$ and $S_2$ of a CSS (L, 2) are used to modulate a radar signal as described in the present description, which radar signal is transmitted and reflected by a target, the extracted data of the reflection signal may be split into two partial extracted data, one partial data relating to the sequences $S_1$, and another partial data relating to the sequences $S_2$. Each of these two partial data may be a FT-Doppler matrix (*L* ∗ *N*). In each FT-Doppler matrix, the Doppler may be compensated along the FT.

The step of performing (S505) a range correlation may comprise for each of the number K of partial extracted data:

performing a range correlation along the FT dimension on the compensated 2D FT-Doppler matrix (*L* ∗ *N*) for generating a 2D Range-Doppler matrix (*L* ∗ *N*).

The signal processing method may comprise: generating (S506) the resulting data based on said 2D Range-Doppler matrix generated for each of the number K of partial extracted data.

The resulting data may be a 2D Range-Doppler matrix (*L* ∗ *N*).

The resulting data may be a 2D Range-Doppler map, RDM.

After the step of compensating (S504), the step of performing a range correlation range (S505) for resulting two 2D Range-Doppler matrices (*L* ∗ *N*), and/or two RDMs. These two 2D Range-Doppler matrices (*L* ∗ *N*) may coherently added. These two RDMs may be coherently added.

The step of compensating (S504) the converted data may comprise two parts.

The step of compensating (S504) the converted data may comprise compensating a time offset among a start point in time of each sequence $S_1$, $S_2$, ... $S_K$ of one sequence element of the modulation signal.

This first part may compensate for a time offset. The time offset between the start point in time of each of the sequence $S_1$, $S_2$, ... $S_K$ of one sequence element of the modulation signal may be compensated. This first part does not depend on the FT. This first part may be defined to be, for each Doppler bin n:

$$e^{-j2\pi L_{AB}n/(LN)} \text{ for } n \leq N/2$$

$$e^{-j2\pi L_{AB}(n-N)/(LN)} \text{ for } n > N/2$$

$L_{AB}$ maybe a delay in FT between the start point in time of each of the sequence $S_1$, $S_2$, ... $S_K$ of one sequence element of the modulation signal.

For example, two sequences $S_1$ and $S_2$ of a CSS (L, 2) are used to modulate a radar signal as described in the present description, which radar signal is transmitted and reflected by a target. $L_{AB} = 2 ∗ L$, if the modulation signal is as the example of Fig. 2A. $L_{AB} = 2 ∗ (M + 1) ∗ L$, if the modulation signal is as the example of Fig. 3A.

The step of compensating (S504) the converted data may comprise: compensating, along the FT dimension, the phase rotation, column-wise of the generated 2D FT-Doppler matrix (*L* ∗ *N*).

This second part may compensate for a FT phase rotation.

The compensation for a column n of the generated 2D FT-Doppler matrix (*L* ∗ *N*), is defined as:

$$e^{-j2\pi(0:n-1)/(LN)} \text{ for } n \leq N/2$$

$$e^{-j2\pi(0:N-1)(n-N)/(LN)} \text{ for } n > N/2$$

The notation 0:x-1 stands for all integers in the interval [0, x-1].

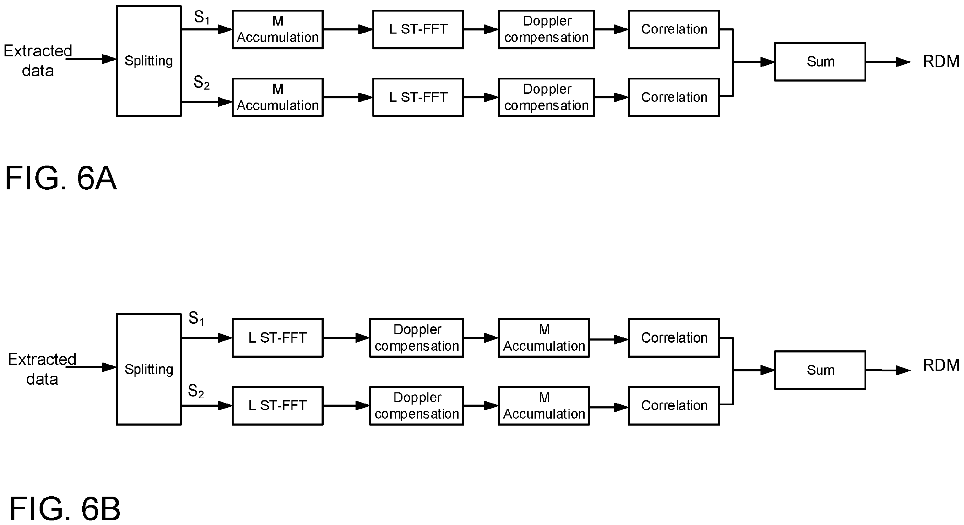

In connection with Figs 6A- 6B, the signal processing method will be discussed in more detail.

Fig. 6A is an example diagram of the signal processing method where the M coherent accumulations are performed in the time-domain, TD, herein referred as TD-scheme.

The extracted data may be split into a number K of partial extracted data for processing in parallel. In Fig. 6A, only two partial extracted data respectively relating to the sequence sequences $S_1$ and $S_2$ are illustrated.

For each of the number K of partial extracted data, the method may further comprise: prior to the step of processing (S503) the extracted data, performing a coherent accumulation on the extracted data along the ST dimension.

The coherent accumulation is done along each group of M consecutive sequence elements along the ST dimension.

Firstly, the M coherent accumulation may be performed on the partial extracted data. The coherent TD accumulation may improve SNR.

As shown in Fig. 6A, after the accumulation, the step of converting the ST dimension of said partial extracted data to the Doppler frequency dimension may comprise performing a Fast Fourier Transform, FFT, or a Discrete Fourier Transform, DFT. A size of the FFT or DFT may be N.

Then, for each partial extracted data, Doppler compensation is performed, and correlation is performed. The result of each partial extracted data may be summed together for generating a final result, e.g., a RDM, of signal processing.

Fig. 6B is an example diagram of the signal processing method where the M coherent accumulations are performed in the frequency-domain (FD) after the step of compensating (S504), herein referred as FD-scheme.

The extracted data may be split into a number K of different partial extracted data for processing in parallel. Similar to Fig. 6A, only two partial extracted data relating to the sequence sequences $S_1$ and $S_2$ are illustrated.

For each of the number K of partial extracted data, the method may further comprise: prior to the step of performing (S505) a range correlation, performing a coherent accumulation on the compensated data along the Doppler frequency dimension.

The coherent accumulation may accumulate M consecutive Doppler bins.

Firstly, the step of converting the ST dimension of each partial extracted data to the Doppler frequency dimension may comprise performing a FFT, or a DFT.

A size of the FFT or DFT may be $M * N$, when the modulation signal for modulating a radar signal is as the example of Fig. 2A. Comparing the example of Fig. 6A, a larger size ($M * N$) of FFT/DFT is used for processing the partial extracted data. This may improve Doppler ambiguity, although Doppler resolution may be degraded.

A size of the FFT or DFT may be N, when the modulation signal for modulating a radar signal is as the example of Fig. 3A. Using a smaller size N of FFT/DFT may reduce Doppler ambiguity, but an improved Doppler resolution may be achieved.

As shown in Fig. 6B, after processing the partial extracted data by converting the ST dimension of each partial extracted data to the Doppler frequency dimension, Doppler compensation, accumulation, and correlation are sequentially performed for each partial extracted data. The result of each partial extracted data may be summed together for generating a final result, e.g., a RDM, of signal processing of the extracted data.

Taking a MIMO radar system having a number $N_{Tx}$ of radar transmitters (e.g., Tx antennas) for transmitting a number $N_{Tx}$ of radar signals as an example. The number $N_{Tx}$ of modulation signals for respectively modulating the number $N_{Tx}$ of radar signals are generated by using a MOCS (L, K, P), wherein $K = P = N_{Tx}$. There may be M coherent accumulations.

The range/Doppler resolutions and ambiguities, and other parameters, derived based on the examples of modulation signals, i.e. the examples of modulation signals of Fig. 2B and 3B, and examples of the signal processing method, i.e. the examples of TD-scheme and FD-scheme of the present description, are listed in Table 1, wherein $M > 1$.

For the comparison, the same range resolution, same range ambiguity, same number of coherent accumulations and same frame duration are used. In addition, one column of using APS as a modulation signal is added for comparison.

*Table 1 Resolutions and ambiguities with M>1 (Frequency: 79 GHz, BW: 0.5 GHz, Tc: 2 ns)*

|  | APS | MOCS Modulation Signals of Fig. 2B | MOCS Modulation signals of Fig.3B |  |
| --- | --- | --- | --- | --- |
| Range resolution | c/(2BW) | c/(2BW) | c/(2BW) |  |
| Range ambiguity | L*c/(4*BW) | L*c/(2*BW) | L*c/(2BW) |  |

(continued)

| | APS | MOCS Modulation Signals of Fig. 2B | MOCS Modulation signals of Fig.3B | |
|---|---|---|---|---|
| Doppler resolution (TD-scheme) | $1/(N_{Tx}*(M+1)*N*L*Tc)$ | $1/(2*N_{Tx}*M*N*L*Tc)$ | $1/(N_{Tx}*(M+1)*N*L*Tc)$ | |
| Doppler resolution (FD-scheme) | $1/(N_{Tx}*N*L*Tc)$ | $1/(2*N_{Tx}*N*L*Tc)$ | $M/(N_{Tx}*(M+1)*N*L*Tc)$ | |
| Doppler ambiguity (TD-scheme) | $1/(2*N_{Tx}*(M+1)*L*Tc)$ | $1/(4*N_{Tx}*M*L*Tc)$ | $1/(2*N_{Tx}*(M+1)*L*Tc)$ | |
| Doppler ambiguity (FD-scheme) | $1/(2*N_{Tx}*L*Tc)$ | $1/(4*N_{Tx}*L*Tc)$ | $1/(2*N_{Tx}*(M+1)*L*Tc)$ | |
| Sequence length L | 2020 | 1024 | 1024 | |
| # of coherent acc. M | 3 | 4 | 3 | |
| # of slow-time points N | 128 | 128 | 256 | |
| # of TX antennas $N_{Tx}$ | 4 | 4 | 4 | |
| Modulation signal duration | 8.27E-03 | 8.39E-03 | 8.39E-03 | s |
| Range resolution | 0.30 | 0.30 | 0.30 | m |
| Range ambiguity | 303 | 307.2 | 307.2 | m |
| Doppler resolution (TD-scheme) | 120.9 | 119.2 | 119.2 | Hz |
| Doppler resolution (FD-scheme) | 483.4 | 476.8 | 357.6 | Hz |
| Doppler ambiguity (TD-scheme) | 7.74E+03 | 7.63E+03 | 1.53E+04 | Hz |
| Doppler ambiguity (FD-scheme) | 3.09E+04 | 3.05E+04 | 1.53E+04 | Hz |
| Velocity resolution (TD-scheme) | 0.83 | 0.81 | 0.81 | km/h |
| Velocity resolution (FD-scheme) | 3.30 | 3.26 | 2.44 | km/h |
| Velocity ambiguity (TD-scheme) | 52.87 | 52.15 | 104.30 | km/h |
| Velocity ambiguity (FD-scheme) | 211.49 | 208.60 | 104.30 | km/h |

In Table 1, c represents the velocity of light in free space.

From the above, some observations can be made:

Radar signals modulated by modulation signals of Fig. 2B has the same performance as APS.

Radar signals modulated by modulation signals of Fig. 3B with TD-scheme has a double velocity ambiguity compared to APS with TD-scheme.

The trade-off for resolution and ambiguity according to Table 1 is as follows:

Radar signals modulated by modulation signals of Figs 2A- 2B with FD-scheme is a good option for high Doppler ambiguity with degraded Doppler resolution. It has the same performance as APS with FD-scheme.

Radar signals modulated by modulation signals of Figs 3A- 3B with TD-scheme is a good option for fine Doppler resolution and good Doppler ambiguity. It outperforms APS by a factor 2 for the Doppler ambiguity and has the same Doppler resolution.

When M = 1, there is no accumulation performed. Thus, the modulation signals of Fig. 2A- 2B would be the same as those of Fig. 3A- 3B. Radar signals modulated by modulation signals of Figs 2A- 2B and 3A- 3B outperform APS in Doppler ambiguity by a factor 2.

Similar to Table 1, Table 2 shows the range/Doppler resolutions and ambiguities, and other parameters, derived based on the examples of modulation signals, i.e. the examples of modulation signals of Fig. 2B and 3B, and examples of the signal processing method, i.e. the examples of TD-scheme and FD-scheme of the present description, wherein $M = 1$.

*Table 2 Resolutions and ambiguities with M=1 (Frequency: 79GHz, BW: 0.5 GHz, Tc: 2 ns)*

|  | APS | MOCS Modulation Signals of Fig. 2B | MOCS Modulation signals of Fig. 3B |  |
|---|---|---|---|---|
| Sequence length L | 2020 | 1024 | 1024 |  |
| # of coherent acc. M | 1 | 1 | 1 |  |
| # of slow-time points N | 256 | 512 | 512 |  |
| # of TX antennas $N_{Tx}$ | 4 | 4 | 4 |  |
| Modulation signal duration | 8.27E-03 | 8.39E-03 | 8.39E-03 | s |
| Range resolution | 0.30 | 0.30 | 0.30 | m |
| Range ambiguity | 303 | 307.2 | 307.2 | m |
| Doppler resolution (TD-scheme) | 120.9 | 119.2 | 119.2 | Hz |
| Doppler ambiguity (TD-scheme) | 1.55E+04 | 3.05E+04 | 3.05E+04 | Hz |
| Velocity resolution (TD-scheme) | 0.83 | 0.81 | 0.81 | km/h |
| Velocity ambiguity (TD-scheme) | 52.87 | 52.15 | 104.30 | km/h |

When $M$ = 1, a radar signal modulated by modulation signals of Figs 2A- 2B outperform APS by a factor 2 in Doppler ambiguity. Such radar signal has the same performance as MLS but with much better range sidelobes.

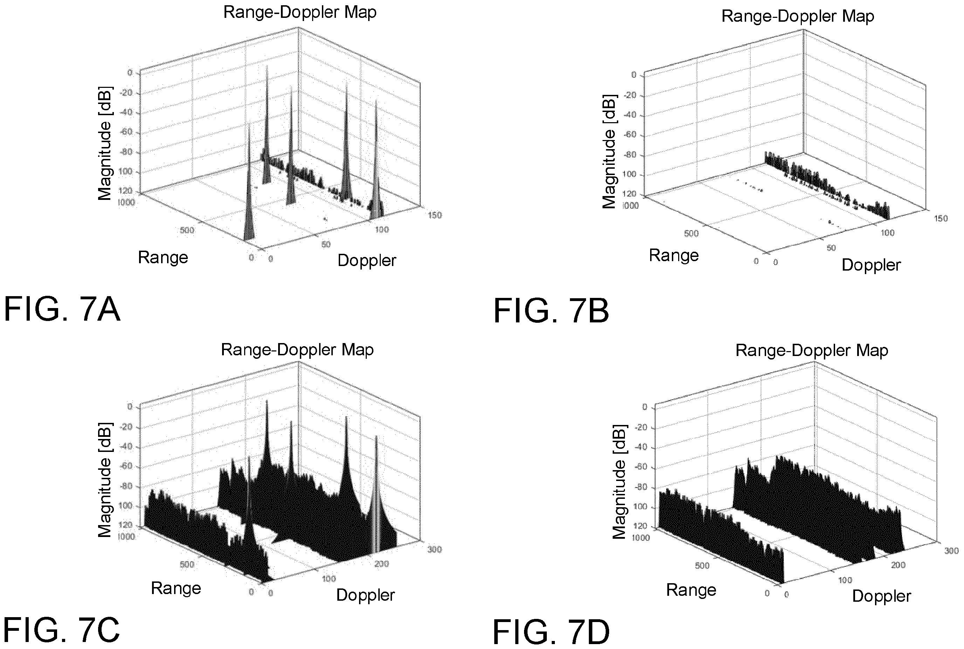

Fig. 7A- 7D are diagrams of simulated RDMs.

Each of these simulated RDMs has a first axis denoting range, a second axis denoting Doppler, and a third axis denoting magnitude (dB).

The configuration of the simulations are as follows.

The simulations were performed for an automotive scenario with a 79 GHz PMCW MIMO radar system using a MOCS (1024, 4, 4) with the parameters listed in Table I.

Only the first radar transmitter of the PMCW MIMO radar system was activated and the RDM based on a reflection signal received by a single radar receiver is visualized. When the radar receiver has the correlators corresponding to first radar transmitter, it is herein referred as the "direct channel". When the radar receiver has the correlators corresponding to a radar transmitter not being the first radar transmitter, it is herein referred as "orthogonal channel".

Noise is not added in the simulations for visualizing low sidelobe levels. The Hann window is used in the ST dimension. Five targets having a same amplitude and a random Doppler are simulated.

Figs. 7A and 7B are simulated RDMs of the reflection signals of radar signals modulated by modulation signals of Fig. 2B with FD-scheme. Fig. 7A is the simulated RDM of a direct channel. Fig. 7B is the simulated RDM of an orthogonal channel.

The range sidelobes are below -100 dB in both simulated RDMs of Figs 7A and 7B.

Figs. 7C and 7D are simulated RDMs of the reflection signals of radar signals modulated by modulation signals of Fig. 3B with TD-scheme. Fig. 7C is the simulated RDM of a direct channel. Fig. 7D is the simulated RDM of an orthogonal channel.

The range sidelobes are below - 75 dB in both RDMs of Figs 7C and 7D.

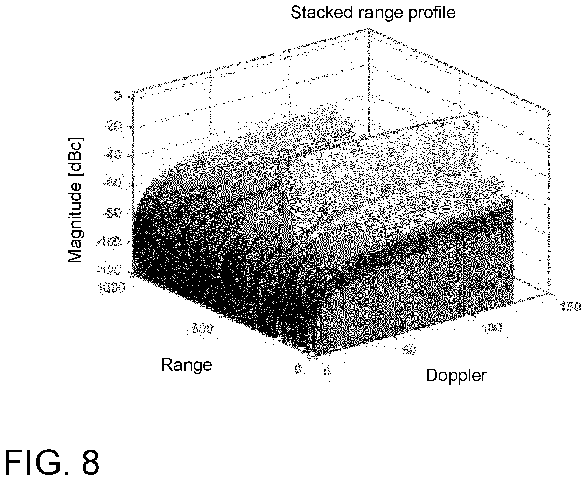

For comparison, range profiles of the reflections signals of radar signals modulated by using Prouhet-Thue-Morse, PTM, sequence, see e.g., J. Tang, Z. Ma N. Zhang, and B. Tang, "Construction of Doppler Resilient Complete Complementary Code in MIMO Radar," IEEE Transactions on Signal Processing, vol. 62, no. 18, 2014*,* is shown in Fig. 8 as a reference.

Similar to Figs 7A- 7D, the stacked range profile of Fig. 8 has a first axis denoting range, a second axis denoting Doppler, and a third axis denoting magnitude.

In order to highlight the sensitivity of the range sidelobes to Doppler, a stacked range profile for a target at an index 200 of the range-axis and for indexes 0 to 127 of the Doppler-axis is visualized. It can be seen that at very low Doppler index, the range sidelobes are approximately at - 80 dBc. But the magnitude of the range sidelobes increases to about - 40 dBc for higher Doppler indices, which is too high.

MOCS, which includes GCP and CSS are good candidates for modulating radar signals of radars, e.g., PMCW MIMO radars, since they can offer, under ideal circumstances, exactly zero range sidelobes and perfect orthogonality between simultaneously transmitting radar transmitters of MIMO implementations. However, their use is precluded with moving targets because the phase rotations due to Doppler significantly degrade the range profiles and destroy the orthogonality between the radar transmitters (e.g., transmitting antennas).

The present description provides examples of modulations signals based on CSS and MOCS. Further, the present description provides the signal processing method to mitigate the degradation due to Doppler shift.

One example is using a MOCS (L, K, P), wherein $K = P = N_{Tx}$. Using the modulations signals of Figs 3A- 3B, combined with the TD-scheme, it outperforms the combination of APS and Hadamard outer code in Doppler ambiguity by a factor 2 for any value of the accumulation factor M, keeping other performance parameters unchanged.

With the provided signal processing method, no knowledge about the targets is required, very low sidelobes can be achieved, and near-ideal orthogonality over the full unambiguous Doppler interval can be achieved.

In the above the inventive concept has mainly been described with reference to a limited number of examples. However, as is readily appreciated by a person skilled in the art, other examples than the ones disclosed above are equally possible within the scope of the inventive concept, as defined by the appended claims.

**Claims**

1. A radar signal for transmitting by a radar transmitter,

   wherein the radar signal is modulated by a modulation signal comprising at least two repetitions of a sequence element;
   wherein the sequence element comprises at least two repetitions of at least two sequences of a same length, such that the modulation signal is periodic; and
   wherein the at least two sequences are correlated such that a sum of correlation of the at least two sequences produces range sidelobes less than - 60 dB, preferably less than - 70 dB, most preferably less than - 80 dB.

2. The radar signal according to claim 1, wherein the radar signal is a Phase-Modulated Continuous-Wave, PMCW, signal.

3. The radar signal according to claim 1 or 2,

   wherein the modulation signal consists of a number $M * N$ of repetitions of the sequence element;
   wherein the sequence element consists of a number $2 * K$ of sequences arranged in an order of two sequences $S_1$, two sequences $S_2$, ... and two sequences $S_K$;
   wherein the sequences $S_1$, $S_2$, ... $S_K$ form a Complementary Sequence Set, CSS (L, K) {$S_1$, $S_2$, ... $S_K$}, and
   wherein the length of each of the sequences $S_1$, $S_2$, ... $S_K$ is L.

4. The radar signal according to claim 1 or 2,

   wherein the modulation signal consists of a number N of repetitions of the sequence element;
   wherein the sequence element consists of a number $(M + 1) * K$ of sequences arranged in an order of a number $M + 1$ of repetitions of a sequence $S_1$, a number $M + 1$ of repetitions of a sequence $S_2$, ... and a number $M + 1$ of repetitions of a sequence $S_K$;
   wherein the sequences $S_1$, $S_2$, ... $S_K$ form a Complementary Sequence Set, CSS (L, K) {$S_1$, $S_2$, ... $S_K$}, and

wherein the length of each of the sequences $S_1, S_2, ... S_K$ is L.

5. The radar signal according to claim 3 or 4,

   wherein K is an even positive integer, such as 2, 4, 6, ...;
   wherein L is a positive integer, when L is an odd positive integer, K is a multiple of 4, such as 4, 8, 12, ...;
   wherein M is a positive integer and $M \geq 1$; and
   wherein N is a positive integer and $N \geq 2$.

6. The radar signal according to any of claims 3- 5, wherein when $K = 2$, the sequences $S_1$ and $S_2$ are Golay Complementary Pairs, GCP;
   preferably $L = 2^a 10^b 26^c$, and any of a, b, c is a positive integer or zero.

7. A number $N_{Tx}$ of radar signals for simultaneously transmitting by a number $N_{Tx}$ of radar transmitters of a Multiple-Input-Multiple-Output, MIMO, radar, respectively,

   wherein each radar signal of the number $N_{Tx}$ of radar signals is a radar signal according to claim 1 or 2, and
   wherein the number $N_{Tx}$ of radar signals are orthogonal to each other; or
   wherein each radar signal of the number $N_{Tx}$ of radar signals is a radar signal according to any of claims 3- 6,
   wherein said CSS formed by the sequences $S_1, S_2, ... S_K$ of said modulation signal for modulating each radar
   signal of the number $N_{Tx}$ of radar signals belongs to a Mutually Orthogonal Complementary Set, MOCS (L, K, P) {$CSS_1, CSS_2, ... CSS_P$} comprising a number P of CSSs, and
   wherein $P \leq K$ and $P \geq N_{Tx}$.

8. The number $N_{Tx}$ of radar signals according to claim 7,
   wherein $K = P = N_{Tx}$.

9. A signal processing method, comprising:

   obtaining a signal comprising a reflection signal caused by a radar signal transmitted in an environment and reflected by a target, said radar signal being:

   i) a radar signal according to any of claims 1-6, or
   ii) a radar signal of the number $N_{Tx}$ of radar signals according to any of claims 7- 8;

   extracting, from the obtained signal, data comprising a Fast-Time dimension and a Slow-Time dimension;
   processing the extracted data for generating converted data comprising the Fast-Time dimension and a Doppler frequency dimension;
   compensating the converted data for Doppler shift; and
   performing a range correlation along the Fast-Time dimension on the compensated data for generating a resulting data comprising a range dimension and the Doppler frequency dimension.

10. The signal processing method according to claim 9, when said radar signal is:

    i) a radar signal according to any of claims 3- 6, or
    ii) a radar signal of the number $N_{Tx}$ of radar signals according to any of claims 7- 8, wherein each radar signal of the number $N_{Tx}$ of radar signals is a radar signal according to any of claims 3- 6,
    the signal processing method comprising:

    prior to the step of processing the extracted data, splitting the extracted data into a number K of partial extracted data, which respectively comprises data related to one sequence of the sequences $S_1, S_2, ... S_K$ of said modulation signal, wherein each of the number K of partial extracted data is arranged as a two-dimensional, 2D, matrix ($L * N$), wherein one dimension is the Fast-Time dimension (L) and another dimension is the Slow-Time dimension (N);

    wherein the step of processing the extracted data comprises:
    for each of the number K of partial extracted data:
    converting the Slow-Time dimension of said partial extracted data to the Doppler frequency dimension for generating a 2D Fast-Time -Doppler matrix ($L * N$);
wherein the step of compensating the converted data comprises:
for each of the number K of partial extracted data:
compensating, for each element of the generated 2D Fast-Time -Doppler matrix ($L * N$), a phase rotation caused by Doppler shift along the Fast-Time dimension; and
wherein the step of performing a range correlation comprises:
for each of the number K of partial extracted data:
performing a range correlation along the Fast-Time dimension on the compensated 2D Fast-Time - Doppler matrix ($L * N$) for generating a 2D Range - Doppler matrix ($L * N$).

**11.** The signal processing method according to claim 10, further comprising:

generating the resulting data based on said 2D Range - Doppler matrix generated for each of the number K of partial extracted data;
wherein the resulting data is a 2D Range - Doppler matrix ($L * N$);
preferably the resulting data is a 2D Range - Doppler map, RDM.

**12.** The signal processing method according to claim 10 or 11, wherein the step of compensating the converted data comprises:

compensating, independent of the Fast-Time dimension, a time offset between a start point in time of the sequence $S_1$ and each of the sequences $S_2$, ... $S_K$ of one sequence element of said modulation signal; and
compensating, along the Fast-Time dimension, the phase rotation, column-wise of the generated 2D Fast-Time - Doppler matrix ($L * N$).

**13.** The signal processing method according to any of claims 10- 12, wherein for each of the number K of partial extracted data, the method further comprises:

prior to the step of processing the extracted data, performing a coherent accumulation on the extracted data along the Slow-Time dimension;
optionally, the step of converting the Slow-Time dimension of said partial extracted data to the Doppler frequency dimension comprises performing a Fast Fourier Transform, FFT, or a Discrete Fourier Transform, DFT, wherein a size of the FFT or DFT is N.

**14.** The signal processing method according to any of claims 10- 12, wherein for each of the number K of partial extracted data, the method further comprises:

prior to the step of performing a range correlation, performing a coherent accumulation on the compensated data along the Doppler frequency dimension;
optionally, the step of converting the Slow-Time dimension of said partial extracted data to the Doppler frequency dimension comprises performing a Fast Fourier Transform, FFT, or a Discrete Fourier Transform, DFT,

I) wherein a size of the FFT or DFT is $M * N,$ when said radar signal is:

i) a radar signal according to any of claim 3 and claims 5- 6 when depending on claim 3, or
ii) a radar signal of the number $N_{Tx}$ of radar signals according to any of claims 7- 8, wherein each radar signal of the number $N_{Tx}$ of radar signals is a radar signal according to any of claim 3 and claims 5-6 when depending on claim 3, and

II) wherein a size of the FFT or DFT is N, when said radar signal is:

i) a radar signal according to any of claim 4 and claims 5- 6 when depending on claim 4, or
ii) a radar signal of the number $N_{Tx}$ of radar signals according to any of claims 7- 8, wherein each radar signal of the number $N_{Tx}$ of radar signals is a radar signal according to any of claim 4 and claims 5-6 when depending on claim 4.

**15.** A radar transmitter configured to transmit any of:

EP 4 455 726 A1

a radar signal according to any of claims 1-6, and
a radar signal of the number $N_{Tx}$ of radar signals according to any of claims 7- 8.

16. A radar receiver configured to receive a reflection signal caused by a radar signal transmitted in an environment and reflected by a target, said radar signal being:

i) a radar signal according to any of claims 1-6, or
ii) a radar signal of the number $N_{Tx}$ of radar signals according to any of claims 7- 8.

19

FIG. 1A

FIG. 1B

MIX_TX

## FIG. 1C

## FIG. 1D

## FIG. 1E

M*N repetitions of sequence element

| $S_1$ | $S_1$ | $S_2$ | $S_2$ | | $S_K$ | $S_K$ | | $S_1$ | $S_1$ | $S_2$ | $S_2$ | | $S_K$ | $S_K$ |

sequence element                                                    sequence element

## FIG. 2A

M*N repetitions of first sequence element

| $S^1_1$ | $S^1_1$ | $S^1_2$ | $S^1_2$ | | $S^1_K$ | $S^1_K$ | | $S^1_1$ | $S^1_1$ | $S^1_2$ | $S^1_2$ | | $S^1_K$ | $S^1_K$ |

First sequence element                                              First sequence element

M*N repetitions of second sequence element

| $S^2_1$ | $S^2_1$ | $S^2_2$ | $S^2_2$ | | $S^2_K$ | $S^2_K$ | | $S^2_1$ | $S^2_1$ | $S^2_2$ | $S^2_2$ | | $S^2_K$ | $S^2_K$ |

Second sequence element                                             Second sequence element

•
•
•

## FIG. 2B

EP 4 455 726 A1

N repetitions of sequence element

M+1 repetitions  M+1 repetitions  M+1 repetitions     M+1 repetitions  M+1 repetitions  M+1 repetitions

| $S_1$ | $S_1$ | $S_2$ | $S_2$ | $S_k$ | $S_k$ | ... | $S_1$ | $S_1$ | $S_2$ | $S_2$ | $S_k$ | $S_k$ |

sequence element                                    sequence element

## FIG. 3A

N repetitions of first sequence element

M+1 repetitions  M+1 repetitions  M+1 repetitions     M+1 repetitions  M+1 repetitions  M+1 repetitions

| $S^1_1$ | $S^1_1$ | $S^1_2$ | $S^1_2$ | $S^1_K$ | $S^1_K$ | ... | $S^1_1$ | $S^1_1$ | $S^1_2$ | $S^1_2$ | $S^1_K$ | $S^1_K$ |

First sequence element                              First sequence element

N repetitions of second sequence element

M+1 repetitions  M+1 repetitions  M+1 repetitions     M+1 repetitions  M+1 repetitions  M+1 repetitions

| $S^2_1$ | $S^2_1$ | $S^2_2$ | $S^2_2$ | $S^2_K$ | $S^2_K$ | ... | $S^2_1$ | $S^2_1$ | $S^2_2$ | $S^2_2$ | $S^2_K$ | $S^2_K$ |

Second sequence element                             Second sequence element

## FIG. 3B

Range-Doppler Map

FIG. 4

S501

↓

S502

↓

S503

↓

S504

↓

S505

↓

S506

# FIG. 5A

Slow-time (N)

Fast-time (L) | Extracted data

⇒ FFT

Doppler (N)

Fast-time (L) | Data

⇓ Doppler compensation ⇓ Correlation

Doppler (N)

Range (L) | Data

# FIG. 5B

FIG. 6A

FIG. 6B

FIG. 7A

FIG. 7B

FIG. 7C

FIG. 7D

Stacked range profile

FIG. 8

Europäisches
Patentamt
European
Patent Office
Office européen
des brevets

# EUROPEAN SEARCH REPORT

**Application Number**

EP 23 17 0612

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | VAN THILLO W ET AL: "Almost perfect auto-correlation sequences for binary phase-modulated continuous wave radar", 2013 EUROPEAN RADAR CONFERENCE, EMA, 9 October 2013 (2013-10-09), pages 491-494, XP032533659, [retrieved on 2013-12-18] | 1-8,15, 16 | INV.<br>G01S13/32<br>G01S7/35<br>G01S13/42<br>G01S13/58 |
| Y | * page 491, left-hand column, lines 11-18 *<br>* page 491, right-hand column, lines 8-22 *<br>* page 492, left-hand column, lines 1-16 *<br>----- | 9-14 | |
| Y | XU SHENGZHI ET AL: "Doppler Shifts Mitigation for PMCW Signals", 2019 INTERNATIONAL RADAR CONFERENCE (RADAR), IEEE, 23 September 2019 (2019-09-23), pages 1-5, XP033764115, DOI: 10.1109/RADAR41533.2019.171290 [retrieved on 2020-04-24] | 9-11,13, 14 | |
| A | * page 1, right-hand column, lines 4-16 *<br>* page 2, right-hand column, line 7 – page 3, left-hand column, line 35 *<br>----- | 1-8,12, 15,16 | TECHNICAL FIELDS SEARCHED (IPC)<br><br>G01S |
| Y | CN 111 220 951 A (BEIJING INSTITUTE TECH) 2 June 2020 (2020-06-02) | 9-14 | |
| A | * the whole document *<br><br>----- | 1-8,15, 16 | |

The present search report has been drawn up for all claims

| Place of search | Date of completion of the search | Examiner |
|---|---|---|
| Munich | 16 October 2023 | Rodríguez González |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 0612

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2023

| Patent document cited in search report | Publication date | Patent family member(s) | Publication date |
|---|---|---|---|
| CN 111220951 A | 02-06-2020 | NONE | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Electronics electrical engineering. **M. SKOLNIK.** Radar Handbook. McGraw-Hill Education, 2008
- **W. VAN THILLO ; P. GIOFFRE ; V. GIANNINI ; D. GUERMANDI ; S. BREBELS ; A. BOURDOUX.** Almost Perfect Auto-correlation Sequences for Binary Phase-modulated Continuous Wave Radar. *Radar Conference (EuRAD), 2013 European,* October 2013, 491-494

- **CHIN-CHONG TSENG ; C. LIU.** Complementary sets of sequences,. *IEEE Transactions on Information Theory,* September 1972, vol. 18 (5), 644-652
- **CHIN-CHONG TSENG ; C. LIU.** Complementary sets of sequences. *IEEE Transactions on Information Theory,* September 1972, vol. 18 (5), 644-652
- **J. TANG ; Z. MA ; N. ZHANG ; B. TANG.** Construction of Doppler Resilient Complete Complementary Code in MIMO Radar. *IEEE Transactions on Signal Processing,* 2014, vol. 62 (18